# EUROPÄISCHE PATENTANMELDUNG

(11) **EP 0 813 940 A2**
(43) Veröffentlichungstag der Anmeldung: **29.12.1997**
(21) Anmeldenummer: 97109468.5
(22) Anmeldetag: 11.06.1997
(51) Int. Cl.: B27C 1/12

(54) **Maschine zum Bearbeiten von Werkstücken aus Holz, Kunststoff und dergleichen**

(30) Priorität: 17.06.1996 DE 19624022
(71) Anmelder: Michael Weinig Aktiengesellschaft, D-97941 Tauberbischofsheim (DE)
(72) Erfinder: Englert, Heinrich, 97922 Lauda-Königshofen-Sachsenflur (DE); Martin, Bernd, 97941 Tauberbischofsheim (DE)
(74) Vertreter: Kohl, Karl-Heinz

(57) **Zusammenfassung**

Die Maschine dient zum Bearbeiten von Werkstücken aus Holz, Kunststoff und dergleichen und hat eine Transportbahn (2), auf der die Werkstücke (3) mit in Reihe hintereinander angeordneten Transportwalzen (5, 11, 12) transportiert werden können. Sie liegen auf den Werkstücken (3) auf. Im Bereich oberhalb der Transportbahn (2) befindet sich eine Spindel (9) für ein Bearbeitungswerkzeug (8). Zumindest der einen, vor und/oder hinter der Spindel (9) liegenden Transportwalze (5, 11, 12) ist wenigstens eine Zusatzwalze (14, 15) zugeordnet. Sie ist, in Transportrichtung (4) der Werkstücke (3) gesehen, neben der Transportwalze (11, 12) angeordnet. Auf dem Werkstück (2) liegen somit zwei Walzen (11, 12, 14, 15) nebeneinander auf, so daß auch sehr kurze Werkstücke (3) einwandfrei unter dem Bearbeitungswerkzeug (8) hindurch transportiert und der nächsten Transportwalze (5) zugeführt werden können. Zumindest eine Walze erfaßt das Werkstück zuverlässig, und das selbst dann, wenn die eine Walze an einer glatten Stelle des Werkstückes angreifen sollte.

## Beschreibung

Die Erfindung betrifft eine Maschine zum Bearbeiten von Werkstücken aus Holz, Kunststoff und dergleichen nach dem Oberbegriff des Anspruches 1.

Mit solchen Maschinen werden beispielsweise Möbel- oder Fensterteile in einem Durchgang bearbeitet. Die auf den Werkstückteilen aufliegenden, drehbar angetriebenen Transportwalzen transportieren die Werkstückteile durch die Maschine. Bei ihrem Durchlauf werden die Werkstückteile durch die entsprechenden Werkzeuge der Maschine bearbeitet. Mit dem oberhalb der Transportbahn vorgesehenen Werkzeug wird die Oberseite der Werkstückteile bearbeitet. Da dieses Werkzeug unterhalb einer Abdeck- bzw. Absaughaube liegt, wird die Reihe der Transportwalzen durch diese Haube und an ihr vorgesehene Andrückelemente unterbrochen. Die vor und hinter dem Werkzeug liegenden Transportwalzen haben dadurch einen verhältnismäßig großen Abstand voneinander. Damit die Werstückteile in einem Durchlauf selbsttätig durch die Maschine transportiert werden können, müssen sie mindestens eine Länge haben, die dem Abstand dieser beiden Transportwalzen vor und hinter dem Werkzeug entspricht. Sind die Werkstückteile kürzer, dann bleiben sie in Höhe des Werkzeuges stehen, da sie einerseits von der in Transportrichtung vor dem Werkzeug liegenden Transportwalze freigekommen, von der nachfolgenden Transportwalze hinter dem Werkzeug aber noch nicht erfaßt worden sind.

Es ist bekannt, zwischen der Transportwalze und dem Werkzeug weitere, im Durchmesser kleinere Walzen vorzusehen, um auch kürzere Werkstücke transportieren zu können. Bei kurzen Werkstücken liegt zumindest über einen Teil des Transportweges nur eine der weiteren Walzen auf dem Werkstück auf. Es kann dann vorkommen, daß diese Walze durchrutscht und das Werkstück nicht transportiert.

Der Erfindung liegt die Aufgabe zugrunde, die gattungsgemäße Maschine so auszubilden, daß kurze Werkstücke zuverlässig durch die Maschine transportiert werden können.

Diese Aufgabe wird bei der gattungsgemäßen Maschine erfindungsgemäß mit den kennzeichnenden Merkmalen des Anspruches 1 gelöst.

Durch die Zusatzwalze wird erreicht, daß auf dem Werkstück zwei Walzen nebeneinander aufliegen, so daß auch sehr kurze Werkstücke einwandfrei unter dem Bearbeitungswerkzeug hindurch transportiert und der nächsten Transportwalze zugeführt werden können. Infolge der Verwendung von zwei nebeneinander angeordneten Walzen ist gewährleistet, daß zumindest eine Walze das Werkstück zuverlässig erfaßt und weitertransportiert. Vorzugsweise sind vor und hinter der Spindel jeweils zwei Walzen nebeneinander vorgesehen, so daß kurze Werkstücke einwandfrei durch die Maschine transportiert werden.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in Vorderansicht einen Teil einer erfindungsgemäßen Maschine,
- Fig. 2: in schematischer und perspektivischer Darstellung einen Teil der Maschine gemäß Fig. 1.

Die Maschine hat einen Maschinentisch 1, auf dem eine Transportbahn 2 für zu bearbeitende Werkstücke 3 vorgesehen ist. Zum Transport der Werkstücke 3 längs der Transportbahn 2 in Transportrichtung 4 dienen drehbar angetriebene Transportwalzen 5, 11, 12 die sich mit Abstand oberhalb der Transportbahn 2 befinden. Die Transportwalzen 5, 11, 12 sind in bekannter Weise an einem Träger 6 gelagert, an den ebenfalls in bekannter Weise ein Antrieb angeschlossen ist, mit dem die Transportwalzen 5, 11, 12 drehbar angetrieben werden. Sie und/oder der Träger 6 sind höhenverstellbar, so daß ihre Lage auf unterschiedlich dicke Werkstücke 3 eingestellt werden kann. Die Transportwalzen 5, 11, 12 liegen auf dem zu transportierenden Werkstück 3 auf und fördern es in Transportrichtung 4 durch die Maschine.

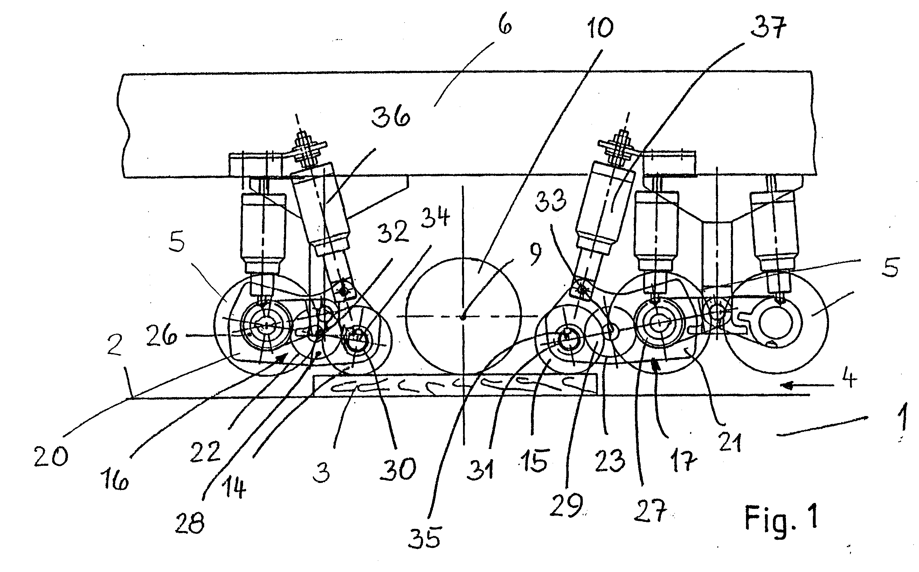

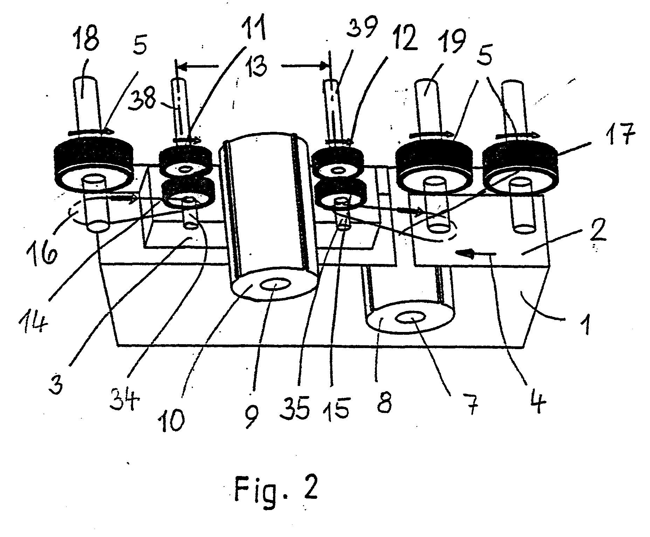

Während des Durchlaufes durch die Maschine werden die Werkstücke 3 mit Werkzeugen bearbeitet. Im dargestellten Ausführungsbeispiel hat die Maschine eine untere, horizontale Spindel 7 (Fig. 2), auf der ein Messerkopf 8 drehfest sitzt. Mit ihm wird beim Durchlauf des Werkstückes 3 dessen Unterseite bearbeitet. Zum Durchtritt der Messer des Messerkopfes 8 ist die Transportbahn 2 entsprechend unterbrochen. In Fig. 1 ist die untere Spindel der Übersichtlichkeit wegen nicht dargestellt.

In Transportrichtung 4 mit Abstand hinter der Spindel 7 ist die Maschine mit einer oberen horizontalen Spindel 9 versehen, auf der drehfest ein Messerkopf 10 sitzt. Mit den Messern des Messerkopfes 10 wird die Oberseite des Werkstückes 3 bearbeitet.

Die Maschine kann darüber hinaus wenigstens eine vertikale Spindel aufweisen, auf der ein entsprechender Messerkopf gelagert ist. Diese vertikale Spindel kann in Transportrichtung 4 der Werkstücke 3 rechts oder links des zu bearbeitenden Werkstückes angeordnet sein. Je nach Lage dieser Spindel wird somit die rechte oder linke Längsseite des Werkstückes 3 beim Transport durch die Maschine durch den auf dieser Spindel sitzenden Messerkopf bearbeitet. Vorteilhaft hat die Maschine eine rechte und eine linke Spindel, so daß beide Längsseiten des Werkstückes bearbeitet werden.

Der Messerkopf 10 liegt unter einer Abdeck- bzw. Absaughaube, die in den Zeichnungen der Übersichtlichkeit wegen nicht dargestellt ist und die ihn nach oben und seitlich abdeckt. Diese Abdeckhaube ragt, in Transportrichtung 4 der Werkstücke 3 gesehen, über die Reihe der Transportwalzen 5, 11, 12. Außerdem sind vor und hinter dem Messerkopf 10 in bekannter Weise (nicht dargestellte) Andrückelemente angeordnet, die auf dem Werkstück 3 aufliegen. Dadurch können im Bereich der Abdeckhaube und der Andrückelemente die Transportwalzen 5, 11, 12 nicht vorgesehen sein. Der Abstand zwischen den beiden in Transportrichtung 4 vor und hinter dieser Abdeckhaube liegenden Transportwalzen 11, 12 bestimmt bei herkömmlichen Maschinen die kürzeste Länge, welche die Werkstücke 3 haben können. Sind diese Werkstücke kürzer als dieser Abstand, dann können sie nicht am Messerkopf 10 vorbei transportiert werden. Ein Weitertransport dieser Werkstücke ist nur dann möglich, wenn sie durch ein nachfolgendes Werkstück weitergeschoben werden. Kommt kein nachfolgendes Werkstück, dann bilden sich bei bekannten Maschinen auf dem unter dem Messerkopf 10 liegenden Werkstück 3 unerwünschte Markierungen, die durch den rotierenden Messerkopf 10 auf dem stillstehenden Werkstück 3 erzeugt werden. Es stellt dann Ausschuß dar und kann nicht mehr weiterverwendet werden.

Die zwischen den beiden vor und hinter der dem Messerkopf 10 zugeordneten Abdeckhaube liegenden Transportwalzen 11, 12 haben kleinere Durchmesser als die anschließenden Transportwalzen 5. Wie Fig. 2 zeigt, liegen die beiden Walzen 11, 12 auf dem kurzen Werkstück 3 auf und können es darum unter dem Messerkopf 10 hindurch transportieren. Der Achsabstand 13 beträgt in einer konkreten Ausführung beispielsweise nur 28 cm.

Abweichend vom dargestellten Ausführungsbeispiel können die Walzen 11, 12 auch gleichen Durchmesser wie die Transportwalzen 5 haben. In diesem Fall können die Walzen 11, 12 durch jeweils eine Transportwalze 5 gebildet sein.

Die Walzen 11, 12 sind angetrieben und so auf die Drehzahl der im Durchmesser größeren Transportwalzen 5 abgestimmt, daß das Werkstück 3 im Bereich des Messerkopfes 10 gleichmäßig transportiert wird. Die Walzen 11, 12 und die Transportwalzen 5 haben die gleiche Umfangsgeschwindigkeit. Der Radius der Walzen 11, 12 ist kleiner als der Radius der Transportwalzen 5. Senkrecht zur Transportrichtung 4 gesehen, können die Walzen 11, 12 teilweise in die Abdeckhaube des Messerkopfes 10 ragen oder zumindest neben den Andrückelementen laufen, so daß die Walzen 11, 12 nur geringen Abstand vom Messerkopf 10 haben.

Fluchtend zu den Walzen 11, 12 ist jeweils eine Zusatzwalze 14, 15 vorgesehen. Sie haben vorteilhaft gleichen Durchmesser wie die Walzen 11, 12 und sind ebenfalls drehbar angetrieben. Somit befinden sich in Transportrichtung 4 vor und hinter dem Messerkopf 10 jeweils zwei axial benachbart zueinander liegende Walzen 11, 14 und 12, 15, die gleichsinnig angetrieben werden und einen zuverlässigen Transport des Werkstückes 3 gewährleisten. Infolge der paarweisen Anordnung der Walzen ist sichergestellt, daß sie auf dem Werkstück 3 nicht durchrutschen. Selbst wenn das Werkstück 3 so kurz ist, daß es nur von einem der beiden Walzenpaare erfaßt wird, ist auf diese Weise gewährleistet, daß das Werkstück 3 einwandfrei transportiert wird.

Die Zusatzwalzen 14, 15 können beispielsweise aus Einbaugegebenheiten mit ihrer Achse in Transportrichtung 4 versetzt zur Achse der Walzen 11, 12 angeordnet sein. Dieser Versatz ist höchstens nur so groß, daß die Drehachse der Zusatzwalzen 14, 15, senkrecht zur Transportrichtung 4 gesehen, die Walzen 11, 12 durchdringt. Vorteilhaft im Hinblick auf die kurzen Werkstücke 3 ist aber die fluchtende oder zumindest nahezu fluchtende Lage der Achsen der Walzen 11, 14 bzw. 12, 15 zueinander.

Die beiden Zusatzwalzen 14, 15 sind jeweils über ein Aufsteckgetriebe 16 und 17 mit der Welle 18, 19 der vor und hinter dem Messerkopf 10 befindlichen Transportwalze 5 verbunden. Die Aufsteckgetriebe 16, 17 sind in Fig. 2 nur schematisch dargestellt. Sie haben jeweils ein Gehäuse 20, 21, in dem jeweils ein Zahnradgetriebe 22, 23 untergebracht ist. Die Aufsteckgetriebe 16, 17 haben jeweils eine Hohlwelle, die auf die Welle 18, 19 aufgeschoben wird. Auf der Kohlwelle sitzt innerhalb des Gehäuses 20, 21 drehfest ein Zahnrad 26, 27, das über ein Zahnrad 28, 29 mit einem Zahnrad 30, 31 antriebsverbunden ist. Während die Zahnräder 28, 29 im Getriebegehäuse 20, 21 auf einer Zwischenwelle 32, 33 drehfest gelagert sind, sitzen die Zahnräder 32, 33 auf Abtriebswellen 34, 35. Sie ragen aus dem Gehäuse 20, 21 und tragen drehfest die Zusatzwalzen 14, 15. Die Wellen 32 bis 35 liegen parallel zueinander und senkrecht zur Transportrichtung 4 der Werkstücke 3.

Die Gehäuse 20, 21 der Aufsteckgetriebe 16, 17 sind an einer Kolben-Zylinder-Einheit 36, 37 aufgehängt, die am Träger 6 gehalten sind. Über diese Einheiten 36, 37 werden die Aufsteckgetriebe 16, 17 und damit die Zusatzwalzen 14, 15 gegen das Werkstück 3 belastet. Die Walzen 11, 12 und die Transportwalzen 5 sind pendelnd gelagert, so daß sie sich Unebenheiten auf der Oberseite des Werkstückes 3 bzw. unterschiedlichen Rohholzstärken anpassen können. Eine solche Pendellagerung der Transportwalzen 5 und der Walzen 11, 12 ist bei derartigen Maschinen bekannt und wird darum nicht näher beschrieben. Auch die Zusatzwalzen 14, 15 können sich infolge der Kolben-Zylinder-Einheiten 36, 37 und der pendelnden Aufhängung der Aufsteckgetriebe 16, 17 Unebenheiten auf der Werkstückoberseite und unterschiedlichen Rohholzstärken anpassen. Da die Walzen 11, 12 und die Zusatzwalzen 14, 15 unabhängig voneinander pendelnd aufgehängt und angetrieben sind, ist auf jeden Fall gewährleistet, daß zumindest eine Walze das Werkstück 3 transportiert, auch wenn sich die Reibeigenschaften infolge von Harzablagerungen auf dem Werkstück und dgl. unter einer Walze ändern.

Sämtliche Kolben-Zylinder-Einheiten können hydraulisch oder pneumatisch arbeiten. Es ist auch möglich, die Walzen 5; 11, 12; 14, 15 beispielsweise durch wenigstens eine Feder in Richtung auf das Werkstück 3 zu belasten.

Die Zahnräder 26 bis 31 der beiden Aufsteckgetriebe 16, 17 sind so aufeinander abgestimmt, daß die Transportwalze 5, von welcher der Antrieb abgeleitet wird, und die angetriebene Zusatzwalze 14, 15 gleiche Umfangsgeschwindigkeiten haben.

## Patentansprüche

1. Maschine zum Bearbeiten von Werkstücken aus Holz, Kunststoff und dergleichen, mit mindestens einer Transportbahn, auf der die Werkstücke mit in Reihe hintereinander angeordneten Transportwalzen transportierbar sind, die auf den Werkstücken aufliegen, und mit einer im Bereich oberhalb der Transportbahn liegenden Spindel für ein Bearbeitungswerkzeug, vorzugsweise einen Messerkopf,
dadurch gekennzeichnet, daß zumindest der einen, vor und/oder hinter der Spindel (9) liegenden Transportwalze (5, 11, 12) mindestens eine Zusatzwalze (14, 15) zugeordnet ist, die, in Transportrichtung (4) der Werkstücke (3) gesehen, neben der Transportwalze (11, 12) angeordnet ist.

2. Maschine nach Anspruch 1,
dadurch gekennzeichnet, daß die Zusatzwalze (14, 15) zumindest annähernd fluchtend zur Transportwalze (11, 12) angeordnet ist.

3. Maschine nach Anspruch 1 oder 2,
dadurch gekennzeichnet, daß der Antrieb der Zusatzwalze (14, 15) von der in Transportrichtung (4) der Werkstücke (3) benachbarten Transportwalze (5) abgeleitet ist.

4. Maschine nach einem der Ansprüche 1 bis 3,
dadurch gekennzeichnet, daß die Zusatzwalze (14, 15) über ein Aufsteckgetriebe (16, 17) mit der in Transportrichtung (4) der Werkstücke (3) benachbarten Transportwalze (5) antriebsverbunden ist.

5. Maschine nach einem der Ansprüche 1 bis 4,
dadurch gekennzeichnet, daß die Zusatzwalze (14, 15) kleineren Durchmesser als die Transportwalzen (5) hat.

6. Maschine nach einem der Ansprüche 1 bis 5,
dadurch gekennzeichnet, daß die Zusatzwalze (14, 15) gleichen Durchmesser hat wie die neben ihr liegende Transportwalze (11, 12).

7. Maschine nach einem der Ansprüche 1 bis 6,
dadurch gekennzeichnet, daß jeder der beiden in Transportrichtung (4) der Werkstücke (3) vor und hinter der Spindel (9) liegenden Transportwalzen (11, 12) wenigstens eine Zusatzwalze (14, 15) zugeordnet ist.

8. Maschine nach einem der Ansprüche 1 bis 7,
dadurch gekennzeichnet, daß die Transportwalzen (5, 11, 12) und die Zusatzwalzen (14, 15) gleiche Umfangsgeschwindigkeit haben.

9. Maschine nach einem der Ansprüche 1 bis 8,
dadurch gekennzeichnet, daß die Zusatzwalze (14, 15) gegen das Werkstück (3) belastet ist.

10. Maschine nach einem der Ansprüche 1 bis 9,
dadurch gekennzeichnet, daß die in Transportrichtung (4) der Werkstücke (3) vor und hinter der Spindel (9) liegenden Transportwalzen (11, 12) und die neben ihnen liegenden Zusatzwalzen (14, 15) unabhängig voneinander pendelnd aufgehängt sind.
